# EUROPÄISCHE PATENTSCHRIFT

(11) **EP 2 603 405 B1**
(45) Veröffentlichungstag und Bekanntmachung des Hinweises auf die Patenterteilung: **30.03.2016**
(21) Anmeldenummer: 11738708.4
(22) Anmeldetag: 28.07.2011
(51) Int. Cl.: B60S 1/08

(54) **WISCHERSTEUERUNG**
WIPER CONTROL
COMMANDE D'ESSUIE-GLACE

(30) Priorität: 10.08.2010 DE 102010039107
(43) Veröffentlichungstag der Anmeldung: 19.06.2013
(73) Patentinhaber: Robert Bosch GmbH, 70442 Stuttgart (DE)
(72) Erfinder: KARCHER, Hubertus, 77815 Buehl (DE)
(86) Internationale Anmeldenummer: PCT/EP2011/063019
(87) Internationale Veröffentlichungsnummer: WO 2012/019924

(56) Entgegenhaltungen:
- EP-A2- 1 195 301
- DE-A1- 10 128 128
- DE-A1-102007 002 269
- US-A1- 2010 139 025

## Beschreibung

Die Erfindung betrifft ein Verfahren und eine Vorrichtung zur Steuerung der Bewegung eines Wischerblatts über eine Fläche.

### Stand der Technik

Um eine Windschutzscheibe an einem Kraftfahrzeug von Verunreinigungen und Feuchtigkeit zu befreien, wird ein Wischerblatt in einer Hin- und Herbewegung über die Scheibe geführt. Üblicherweise ist hierfür das Wischerblatt an einem Wischerarm angebracht, der in einer oszillierenden Bewegung um eine Wischerwelle angetrieben wird. Das Wischerblatt umfasst eine Wischlippe, die an der Windschutzscheibe anliegt und über diese hinweggezogen wird. Die Wischlippe wird vom Wischerblatt nachgezogen, so dass bei jedem Richtungswechsel des Wischerblatts bzw. Wischerarms die Wischlippe eine Seite wechselt, an der sie an der Windschutzscheibe anliegt.

Um zu vermeiden, dass die Wischlippe einseitig spröde wird, wird das Wischerblatt vor einem Abstellen der Wischanlage so bewegt, dass die Wischlippe in eine vorbestimmte Ablagerichtung gebracht wird. Die Ablagerichtung kann beispielsweise periodisch gewechselt werden, entweder zeitgesteuert oder nach einer vorbestimmten Anzahl von Ablagen der Wischlippe in derselben Ablagerichtung. Die Ablagepositionen des Wischerblatts auf der Windschutzscheibe befinden sich dabei stets in einem unteren Bereich an der Windschutzscheibe.

Untersuchungen haben gezeigt, dass bei trockener oder stark verschmutzter Windschutzscheibe eine Bewegung, die der Wischerarm durchführt, um die Wischlippe in die vorbestimmte Ablagerichtung zu verbringen, aufgrund einer elastischen Verspannung von Antriebselementen des Wischerarms dazu führen kann, dass der Wischerarm beim Anlaufen aus der Ablageposition an eine Begrenzung im untersten Bereich der Windschutzscheibe anschlägt. Eine damit verbundene Geräuschbelastung kann von einer Person im Bereich des Wischerblatts als unangenehm empfunden werden. Darüber hinaus kann eine Lebensdauer des Wischerblatts durch das Anschlagen verkürzt sein.

US-A- 2010/0139025 ist als Stand der Technik angegeben.

Der Erfindung liegt daher die Aufgabe zugrunde, ein Verfahren und eine Vorrichtung zur Steuerung der Bewegung eines Wischerblatts über eine Fläche anzugeben, mittels derer eine gesteigerte Geräuschbelastung während des Anhaltevorgangs des Wischerblatts vermieden werden kann.

Die Erfindung löst diese Aufgabe durch ein Verfahren mit den Merkmalen des Anspruchs 1 und durch eine Vorrichtung mit den Merkmalen des Anspruchs 10. Unteransprüche geben bevorzugte Ausführungsformen wieder.

Ein erfindungsgemäßes Verfahren zum Steuern der Bewegung eines Wischerblatts über eine Wischfläche umfasst Schritte des Bewegens des Wischerblatts auf und ab über die Wischfläche zwischen einer unteren Wendelage und einer oberen Wendelage. Auf ein Erfassen einer Anforderung, das Wischerblatt anzuhalten, wird das Wischerblatt bis zu einer Abwärtsbewegung im Bereich der unteren Wendelage nach obigem Muster weiterbewegt. Liegt ein Umkehrsignal vor, so wird das Wischerblatt abwärts in eine untere Endlage und von dort aufwärts in eine erste Parklage gebracht, bevor es angehalten wird. Das Wischerblatt wird jedoch nur dann abwärts in die untere Endlage bewegt, wenn zuvor ein niedriger mechanischer Widerstand gegen die Bewegung des Wischerblatts über die Wischfläche bestimmt wurde.

Weist die Bewegung des Wischers über die Wischfläche einen hohen mechanischen Widerstand auf, beispielsweise wenn die Wischfläche trocken ist, so wird erfindungsgemäß verhindert, dass der Wischer beim Anhalten in eine Position gebracht wird, die so nahe an der unteren Endlage liegt, dass aufgrund von elastischen mechanischen Spannungen in einem Antrieb des Wischerblatts ein Anschlagen des Wischerblatts an einem externen Objekt erfolgt. Ein solches Anschlagen ist besonders dann wahrscheinlich, wenn eine zunächst nasse Wischfläche mittels des Wischerblatts getrocknet wird, wobei noch Feuchtigkeit in einem Bereich der unteren Endlage verbleibt. Überstreicht das Wischerblatt beim Anhaltevorgang diese noch feuchte Fläche, so können sich die elastischen Spannungen im Antrieb des Wischerblatts schlagartig lösen, was zum Durchschlagen bzw. Anschlagen des Wischerblatts an dem externen Objekt führen kann.

Liegt das Umkehrsignal nicht vor, so kann das Wischerblatt aus der Abwärtsbewegung in eine zweite Parklage bewegt und dort angehalten werden. Dadurch kann das Wischerblatt bei Beenden der Wischbewegung aus der Wischfläche entfernt werden. Hieraus können sich optische und aerodynamische Vorteile ergeben.

Die erste Parklage liegt vorzugsweise oberhalb der unteren Wendelage und diese oberhalb der zweiten Parklage. Durch die erwähnten Spannungen und/oder ein mechanisches Spiel im Antrieb des Wischblatts kann das Wischblatt auf diese Weise in der ersten oder zweiten Parklage abgelegt werden, wobei jeweils der optische Eindruck entsteht, das Wischblatt stünde in der gleichen Position. Diese Position kann mit der unteren Wendelage zusammenfallen.

In einer alternativen Ausführungsform entspricht die untere Wendelage der zweiten Parklage.

Unabhängig vom bestimmten mechanischen Widerstand kann das Wischerblatt in Abhängigkeit des Umkehrsignals in die untere Endlage bewegt werden, wenn ein Geschwindigkeitssignal oberhalb eines vorbestimmten Schwellenwerts liegt. Oberhalb einer vorbestimmten Geschwindigkeit können Geräusche, die durch ein Durchschlagen bzw. Anschlagen des Wischerblatts hervorgerufen werden, relativ unbedeutend sein, so dass die zweite Parklage direkt und unabhängig vom bestimmten mechanischen Widerstand angefahren werden kann.

Der mechanische Widerstand der Bewegung des Wischerblatts kann auf der Basis einer Stromaufnahme einer das Wischblatt antreibenden elektrischen Antriebseinrichtung bestimmt werden. Dadurch kann ein dedizierter Sensor zur Aufnahme des mechanischen Widerstands vermieden werden, woraus sich Kostenvorteile ergeben können.

Auf eine Anforderung, das Wischerblatt nach dem Anhalten erneut zu bewegen, kann das Wischerblatt zunächst aufwärts bewegt werden. Ein Umlegen der Wischlippe vor dem eigentlichen Wischvorgang kann somit vermieden und ein zügiges Anlaufen des Wischerblatts über den Wischbereich unterstützt werden, so dass sich ein Reinigungsfortschritt schneller einstellen kann.

Das Umkehrsignal kann nach einer vorbestimmten Anzahl Anhaltevorgängen umgeschaltet werden. Insbesondere kann das Umkehrsignal ein- und ausgeschaltet werden, wobei die Anzahlen der Anhaltevorgänge bis zum Umschalten dem momentanen Status des Umkehrsignals angepasst sein. So kann etwa auf eine erste Anzahl Ablegevorgänge der Wischlippe nach oben eine zweite Anzahl Ablegevorgänge der Wischlippe nach unten folgen.

Ein Computerprogrammprodukt mit Programmcodemitteln zur Durchführung des beschriebenen Verfahrens kann auf einer Verarbeitungseinrichtung ablaufen oder auf einem computerlesbaren Datenträger gespeichert sein.

Eine erfindungsgemäße Vorrichtung zur Steuerung der Bewegung eines Wischerblatts über eine Wischfläche umfasst eine Antriebseinrichtung zur Bewegung des Wischerblatts auf und ab über die Wischfläche zwischen einer unteren Wendelage und einer oberen Wendelage, ein erstes Eingabemittel zur Erfassung einer Anforderung, das Wischblatt anzuhalten, ein zweites Eingabemittel zur Erfassung eines mechanischen Widerstands gegen die Bewegung des Wischerblatts über die Wischfläche und eine Steuereinrichtung, die dazu eingerichtet ist, die Antriebseinrichtung anzusteuern, das Wischerblatt abwärts in eine untere Endlage und von dort aufwärts in eine erste Parklage zu bewegen, falls ein Umkehrsignal vorliegt. Dabei ist die Steuereinrichtung ferner dazu eingerichtet, das Wischerblatt nur dann abwärts in die untere Endlage zu bewegen, wenn der mechanische Widerstand unterhalb eines vorbestimmten Schwellenwerts liegt.

### Kurze Beschreibung der Figuren

Die Erfindung wird nun mit Bezug auf die beigefügten Figuren genauer beschrieben, in denen:
- Fig. 1 ein Scheibenwischersystem;
- Fig. 2 ein Diagramm mit Ortskurven des Wischerblatts aus Fig. 1; und
- Fig. 3 ein Ablaufdiagramm eines Verfahrens zur Steuerung des Scheibenwischersystems aus Fig. 1
darstellt.

### Genaue Beschreibung von Ausführungsbeispielen

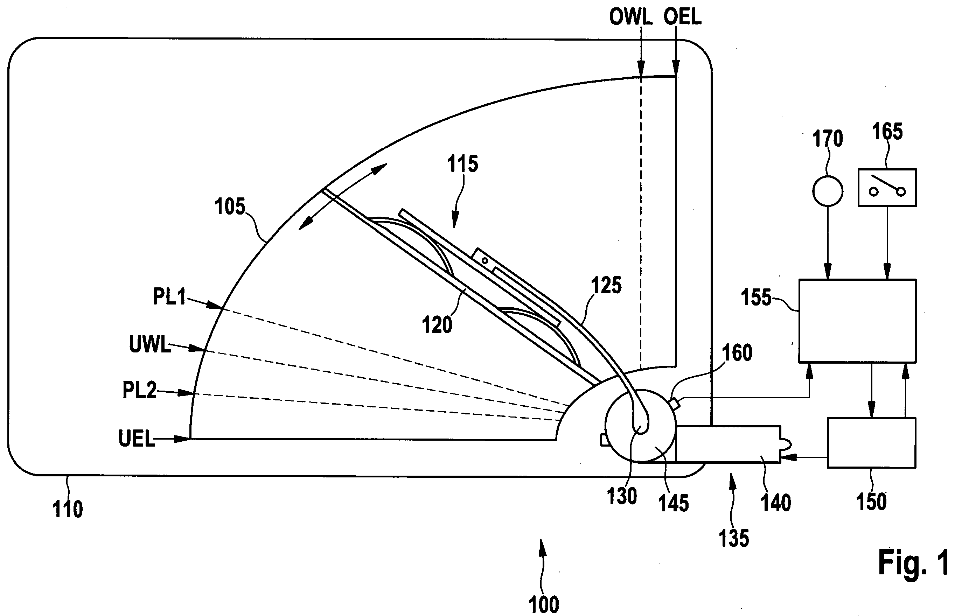

Fig. 1 zeigt ein Scheibenwischersystem 100 zum Einsatz an einem Kraftfahrzeug. Ein Wischbereich 105 einer Sichtscheibe 110 hat im Wesentlichen die Form eines Kreissegments mit einem Öffnungswinkel von ca. 90°. Ein Wischerblatt 115 mit einer Wischlippe 120 ist mittels eines Wischerarms 125 an einer Wischerwelle 130 befestigt, die von einem Antriebsmotor 135 bewegbar ist. Der Antriebsmotor 135 umfasst einen Elektromotor 140 mit einem Getriebe 145. Das Getriebe 145 umfasst üblicherweise ein Untersetzungsgetriebe und in einer weiteren Ausführungsform zusätzlich oder alternativ ein Koppelgetriebe mit einem Gestänge.

Der Elektromotor 140 ist mit einem Leistungsschalter 150 verbunden. Der Leistungsschalter 150 ist mit einer Verarbeitungseinrichtung 155 verbunden und wird von dieser gesteuert. Dabei stellt der Leistungsschalter 150 dem Elektromotor 140 in Abhängigkeit von Steuersignalen von der Verarbeitungseinrichtung 155 eine oder mehrere Spannungen bereit, die in Frequenz, Phase und/oder Polarität beeinflussbar sein können. Integriert in den Leistungsschalter 150 ist ein Stromsensor, der der Verarbeitungseinrichtung 155 ein Signal bereitstellt, das von einem elektrischen Strom abhängt, der durch den Elektromotor 140 fließt. Die Verarbeitungseinrichtung 155 ist mit einem Positionssensor 160 verbunden, der eine Position des Wischerarms 125 bzw. Wischerblatts 115 auf dem Wischbereich 105 abtastet. Bevorzugterweise befindet sich der Positionssensor 160 am Getriebe 145 und kann beispielsweise einen Hall-Sensor umfassen.

Ein Wischerschalter 165 ist mit der Verarbeitungseinrichtung 155 verbunden. Über den Wischerschalter 165 kann eine Bedienperson eine Bewegung des Wischerblatts 115 über den Wischbereich 105 der Sichtscheibe 110 ein- und ausschalten. Dabei können mittels des Wischerschalters 165 unterschiedliche Bewegungsgeschwindigkeiten wählbar sein. Der Wischerschalter 165 kann auch einen Intervallschalter umfassen, so dass der Wischerarm 125 periodisch nach vorbestimmten Intervallen bewegt wird. Bezüglich der vorliegenden Erfindung ist es jedoch ausreichend, davon auszugehen, dass mittels des Wischerschalters 165 eine kontinuierliche Wischbewegung des Wischerblatts 115 lediglich ein- und ausgeschaltet werden kann.

Die Verarbeitungseinrichtung 155 ist ferner mit einem Geschwindigkeitssensor 170 verbunden, der ein Signal bereitstellt, das von einer Geschwindigkeit eines Kraftfahrzeugs abhängt, in dem das Scheibenwischersystem 100 eingebaut ist. In einer anderen Ausführungsform stellt der Geschwindigkeitssensor 170 ein Signal bereit, das von einer Windgeschwindigkeit im Bereich der Sichtscheibe 110 abhängig ist. Das vom Geschwindigkeitssensor 170 bereitgestellte Signal kann auch indirekt bestimmt sein, beispielsweise auf der Basis einer Betrachtung des durch den Elektromotor 140 fließenden Stroms.

Am Wischbereich 105 sind verschiedene Positionen qualitativ angegeben, die in ihrer Reihenfolge von oben nach unten folgende Bedeutung haben:
- obere Endlage (OEL): die oberste Lage, die durch das Wischerblatt 115 im Wischbereich 105 erreichbar ist;
- obere Wendelage (OWL): diejenige Lage, in der das Wischerblatt 115 von einer Aufwärtsbewegung in eine Abwärtsbewegung übergeht;
- erste Parklage (PL1): die Lage, in der das Wischerblatt 115 angehalten wird, wenn es sich in einer Aufwärtsbewegung befindet;
- untere Wendelage (UWL): im kontinuierlichen Wischbetrieb diejenige Lage, in der das Wischerblatt 115 von einer Abwärtsbewegung in eine Aufwärtsbewegung übergeht;
- zweite Parklage (PL2): diejenige Lage, in der das Wischerblatt 115 in einer Abwärtsbewegung angehalten wird; und
- untere Endlage (UEL): die unterste erreichbare Lage des Wischerblatts 115 im Wischbereich 105.

Konkrete Abstände zwischen den einzelnen Lagen sind nicht definiert, jedoch ist ein Winkelbereich zwischen der oberen Wendelage OWL und der unteren Wendelage UWL üblicherweise maximiert. Dementsprechend liegt die obere Wendelage OWL im Bereich der oberen Endlage OEL und die untere Wendelage UWL im Bereich der unteren Endlage UEL. Ein Öffnungswinkel zwischen der ersten Parklage PL1 und der zweiten Parklage PL2 beträgt üblicherweise ca. 2 bis 3°.

Gesteuert durch den Wischerschalter 165 wird in einem kontinuierlichen Betrieb das Wischerblatt 115 zwischen der oberen Wendelage OWL und der unteren Wendelage UWL kontinuierlich hin und her bewegt, wobei der Antriebsmotor 140 in wechselnden Richtungen läuft. Dabei wird durch die Wischbewegung des Wischerblatts 115 ein Bereich zwischen den Wendelagen OWL und UWL gereinigt bzw. getrocknet. Die Wischlippe 120 wird vom Wischerarm 125 stets nachgezogen. Um beim Anhalten des Wischerarms 115 einen vorzeitigen Verschleiß der Wischlippe 120 zu vermeiden, wird der Wischerarm auf eine Weise angehalten, die sicherstellt, dass die Wischlippe 120 abwechselnd nach oben und nach unten zeigt, d.h., dass das Wischerblatt 115 abwechselnd aus einer Abwärtsbewegung und aus einer Aufwärtsbewegung angehalten wird. Dadurch wird die Wischlippe 120 weniger einseitig belastet, wenn sich der Wischerarm 115 nicht in Bewegung befindet.

Soll die Wischlippe 120 nach dem Anhalten des Wischerarms 115 nach oben zeigen, so wird nach einer durch den Wischerschalter 165 ausgedrückten Anforderung zum Anhalten des Wischerblatts 115 die oszillierende Bewegung des Wischerblatts 115 zwischen der oberen Wendelage OWL und der unteren Wendelage UWL zunächst fortgeführt, bis das Wischerblatt 115 die untere Wendelage UWL erreicht hat. Von dort aus wird das Wischerblatt 115 noch bis zur zweiten Parklage PL2 weiterbewegt und dort angehalten.

Soll die Wischlippe 120 am Wischerblatt 115 hingegen nach dem Anhalten des Wischerblatts 115 nach unten zeigen, so wird nach der durch den Wischerschalter 165 ausgedrückten Anforderung zum Anhalten das Wischerblatt 115 bis zur unteren Wendelage UWL weiterbewegt, von dort abwärts zur unteren Endlage UEL und wieder nach oben zur ersten Parklage PL1.

In einer Ausführungsform kann die obere Parklage PL1 der unteren Wendelage UWL entsprechen. Ferner kann die zweite Parklage PL2 der unteren Endlage UEL entsprechen.

Diese beiden unterschiedlichen Anhaltevorgänge werden durch die Verarbeitungseinrichtung 155 gesteuert, indem sie die momentane Position des Wischerblatts 115 über den Positionssensor 160 abtastet und den Leistungsschalter 150 ansteuert, die Drehrichtung und Drehgeschwindigkeit des Elektromotors 140 entsprechend zu steuern.

Wurde mittels des Wischerblatts 115 durch Wischen zwischen der oberen Wendelage OWL und der unteren Wendelage UWL Feuchtigkeit aus dem Wischbereich 105 auf der Sichtscheibe 110 entfernt, so steigt ein Reibwert zwischen der Sichtscheibe 110 und der Wischlippe 120 bzw. dem Wischarm 125 an. In der Folge steigt eine Stromaufnahme des Elektromotors 140 ebenfalls an. Diese Stromaufnahme wird von der Verarbeitungseinrichtung 155 über den Leistungsschalter 150 abgetastet. Die Verarbeitungseinrichtung kann dazu eingerichtet sein, die Bewegungsgeschwindigkeit des Wischerblatts 115 unabhängig vom Reibwert zu regeln.

Bei einem hohen Reibwert wirkt sich ein eventuell vorhandenes Spiel des Getriebes 145 zwischen dem Elektromotor 140 und dem Wischerarm 125 stärker auf die Positionierung des Wischerblatts 115 aus. Es kann auch eine elastische Verformung des Getriebes 145 und/oder des Wischerarms 125 erfolgen. Gelangt die Wischlippe 120 während eines Anhaltevorgangs in einen Bereich unterhalb der unteren Wendelage UWL, wo die Sichtscheibe 110 noch nass ist, so wird der Reibwert zwischen der Wischlippe 120 bzw. dem Wischerblatt 115 und der Sichtscheibe 110 schlagartig verringert, wodurch die mechanische Energie, die im elastisch verformten Getriebe 145 und/oder Wischerarm 125 gespeichert ist, den Wischerarm 115 nach unten beschleunigt. Dabei kann der Wischerarm 115 an einem externen Objekt anschlagen, wodurch eine Lärmbelästigung verursacht sein kann.

Erfindungsgemäß ist die Verarbeitungseinrichtung 155 dazu eingerichtet, einen hohen Reibwert zwischen der Wischlippe 120 bzw. dem Wischerblatt 115 und der Sichtscheibe 110 auf der Basis der Stromaufnahme des Elektromotors 140 zu erfassen und die Bewegung des Wischerarms 115 nur derart anzuhalten, dass die Wischlippe 120 nach oben zeigt, wozu der Wischerarm 115 vor dem Anhalten nicht oder nur wenig unter die untere Wendelage UWL bewegt wird.

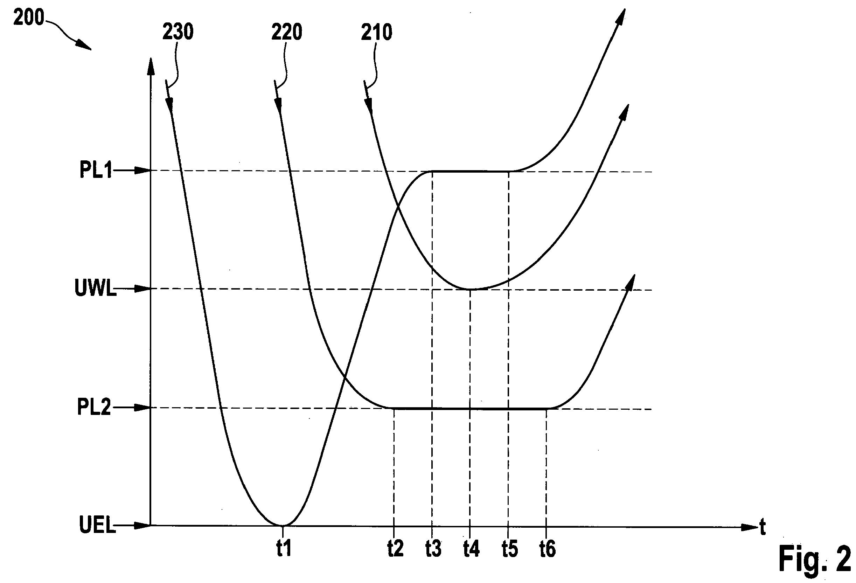

Fig. 2 zeigt ein Diagramm 200 mit Ortskurven des Wischerblatts 115 aus Fig. 1. In horizontaler Richtung ist eine Zeit angetragen. In vertikaler Richtung sind Positionen des Wischerblatts 115 bezüglich des Wischbereichs 105 entsprechend ihrer Lagen in Fig. 1 angetragen.

Die erste Ortskurve 210 zeigt eine Bewegung des Wischerblatts 115 beim kontinuierlichen Wischen zwischen der oberen Wendelage OWL (nicht in Fig. 2 eingezeichnet) und der unteren Wendelage UWL. Das Wischerblatt 115 durchläuft von oben die erste Parklage PL1, bremst ab und erreicht in der unteren Wendelage UWL zum Zeitpunkt T4 den Stillstand. Gleich darauf kehrt sich die Bewegungsrichtung des Wischerblatts 115 um, das Wischerblatt 115 überholt die Wischlippe 120 und das Wischerblatt 115 beschleunigt nach oben über die erste Parklage P1 hinaus.

Die zweite Ortskurve 220 zeigt eine Bewegung des Wischerblatts 115 in die zweite Parklage PL2. Das Wischerblatt 115 nähert sich von oben, überstreicht zunächst die erste Parklage PL1 und danach die untere Wendelage UWL, verlangsamt seine Bewegung und kommt zum Zeitpunkt T2 in der zweiten Parklage PL2 zum Stillstand. Dabei weist die vom Wischerarm 115 nachgezogene Wischlippe 120 nach oben. Hier verharrt der Wischerarm 115 bis zu einer erneuten Anforderung zur Scheibenreinigung zum Zeitpunkt T6. Dann beginnt das Wischerblatt 115, sich wieder nach oben zu bewegen, wobei das Wischerblatt 115 die Wischlippe 120 überholt, so dass diese umklappt und vom Wischerblatt 115 aus nach unten weist. Das Wischerblatt 115 beschleunigt und bewegt sich weiter nach oben.

Die dritte Ortskurve 230 zeigt eine Bewegung des Wischerblatts 115 beim Halten in der ersten Parklage PL1. Das Wischerblatt 115 nähert sich wieder von oben, überstreicht nacheinander die erste Parklage PL1, die untere Wendelage UWL und die zweite Parklage PL2, bevor es seine Bewegung verlangsamt und zum Zeitpunkt T1 in der unteren Endlage UEL zum Stillstand kommt. Unmittelbar anschließend beschleunigt das Wischerblatt 115 wieder in Richtung oben, wobei das Wischerblatt 115 die Wischlippe 120 überholt, so dass diese umklappt und von der Wischlippe 120 aus nach unten weist. Das Wischerblatt 115 verfährt über die zweite Parklage PL2 und die untere Wendelage UWL, um abzubremsen und zum Zeitpunkt T3 in der ersten Parklage PL1 zum Stillstand zu gelangen.

Die Wischlippe 120 weist dabei nach unten. Das Wischerblatt 115 verharrt bis zu einer erneuten Reinigungsanforderung zum Zeitpunkt T5 in der ersten Parklage PL1, um dann nach oben zu beschleunigen.

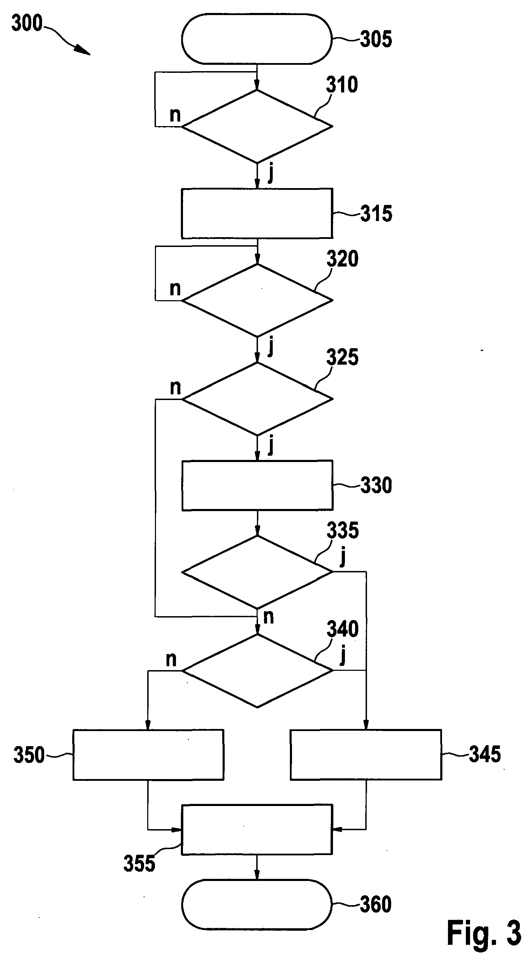

Fig. 3 zeigt ein Ablaufdiagramm eines Verfahrens 300 zur Steuerung des Scheibenwischersystems 100 aus Fig. 1. In einem Schritt 305 befindet sich das Verfahren 300 im Startzustand. In einem anschließenden Schritt 310 wird geprüft, ob eine Anforderung zum Bewegen des Wischerblatts 115 vorliegt. Dieser Schritt wird so oft ausgeführt, bis die Anforderung vorliegt, woraufhin das Wischerblatt 115 in einem Schritt 315 zu einer periodischen Bewegung zwischen der oberen Wendelage OWL und der unteren Wendelage UWL angesteuert wird. In einem anschließenden Schritt 320 wird, währenddem das Wischerblatt 115 bewegt wird, fortlaufend geprüft, ob eine Anforderung zum Anhalten des Wischerblatts 115 vorliegt. Solange diese Anforderung nicht vorliegt, wird der Schritt 320 wiederholt, wobei das Wischerblatt 115 in Bewegung bleibt.

Liegt die Anforderung zum Anhalten vor, so wird in einem Schritt 325 überprüft, ob eine Geschwindigkeit eines Kraftfahrzeugs, in dem das Scheibenwischersystem 100 verbaut ist, unterhalb eines vorbestimmten Schwellenwerts liegt. Ist dies der Fall, so wird in einem Schritt 330 die elektrische Last bestimmt, die der Elektromotor 140 für den Leistungsschalter 150 darstellt. Diese elektrische Last, die maßgeblich durch einen Stromofluss durch den Elektromotor 140 bestimmt ist, hängt von der mechanischen Last des Elektromotors 140 ab, die wiederum von einem Reibungskoeffizienten zwischen dem Wischerblatt 115 bzw. der Wischlippe 120 und der Sichtscheibe 110 im Wischbereich 105 beeinflusst ist. In einem Schritt 335 wird überprüft, ob die in Schritt 330 bestimmte Last oberhalb eines vorbestimmten Schwellenwerts liegt. Dies entspricht einer indirekten Bestimmung, ob die Sichtscheibe 110 im Bereich zwischen der oberen Wendelage OWL und der unteren Wendelage UWL trocken ist.

Ist dies nicht der Fall, so wird in einem Schritt 340 überprüft, ob das Umkehrsignal vorliegt. Das Umkehrsignal deutet an, ob die Lage der Wischlippe 120 bezüglich des Wischerblatts 115 umgekehrt werden muss oder nicht, bevor das Wischerblatt 115 angehalten werden kann. Liegt das Umkehrsignal nicht vor, so wird das Wischerblatt 115 in einem Schritt 345 von oben kommend in die erste Parklage P1 verbracht, so dass die Wischlippe 120 nach oben zeigt. Liegt das Umkehrsignal jedoch vor, so wird das Wischerblatt 115 in einem Schritt 350 entsprechend der Ortskurve 230 in Fig. 2 von oben kommend zunächst bis in die untere Endlage UEL und von dort aus wieder nach oben in die erste Parklage PL1 verbracht, so dass die Wischlippe 120 bezüglich des Wischerarms 115 nach unten zeigt.

Nach dem Schritt 345 oder dem Schritt 350 wird der Wischerarm 125 in einem Schritt 355 angehalten.

Wird im Schritt 335 hingegen bestimmt, dass die Sichtscheibe 110 im Bereich zwischen der oberen Wendelage OWL und der unteren Wendelage UWL trocken ist, so wird der Schritt 340 übersprungen und unabhängig von einem Vorliegen oder Nichtvorliegen des Umkehrsignals der Anhaltevorgang des Wischerblatts 115 in Schritt 345 durchgeführt.

Die Schritte 330 und 335 werden übersprungen, wenn im Schritt 325 festgestellt wird, dass die Geschwindigkeit des Kraftfahrzeugs, in dem das Scheibenwischersystem 100 verbaut ist, oberhalb des vorbestimmten Schwellenwerts liegt. In diesem Fall werden die Schritte 330 und 335 nicht ausgeführt und das Verfahren wird vom Schritt 325 aus im Schritt 340 fortgesetzt, so dass das Umkehrsignal oberhalb einer vorbestimmten Geschwindigkeit wieder berücksichtigt wird.

Nach dem Schritt 355 geht das Verfahren 300 in einen Endzustand 360 über.

## Patentansprüche

1. Verfahren (300) zum Steuern der Bewegung eines Wischerblatts (115) über eine Wischfläche (110), folgende Schritte umfassend:
- Bewegen (315) des Wischerblatts (115) auf und ab über die Wischfläche (110) zwischen einer unteren Wendelage (UWL) und einer oberen Wendelage (OWL);
- Erfassen (320) einer Anforderung, das Wischerblatt (110) anzuhalten;
- Bewegen (345) des Wischerblatts (110) abwärts in eine untere Endlage (UEL) und von dort aufwärts in eine erste Parklage (PL1), falls ein Umkehrsignal vorliegt; und
- Anhalten (355) des Wischerblatts (115);
- wobei das Wischerblatt (115) nur dann abwärts in die untere Endlage (UEL) bewegt wird, wenn zuvor ein niedriger mechanischer Widerstand gegen die Bewegung des Wischerblatts (115) über die Wischfläche (110) bestimmt wurde.

2. Verfahren (300) nach Anspruch 1, ferner umfassend den Schritt des Bewegens (350) des Wischerblatts (115) abwärts in eine zweite Parklage (PL2), falls das Umkehrsignal nicht vorliegt.

3. Verfahren (300) nach Anspruch 2, wobei die erste Parklage (PL1) oberhalb der unteren Wendelage (UWL) und diese oberhalb der zweiten Parklage (PL2) liegt.

4. Verfahren (300) nach Anspruch 1, wobei die untere Wendelage (UWL) der zweiten Parklage (PL2) entspricht.

5. Verfahren (300) nach einem der vorangehenden Ansprüche, wobei das Wischerblatt (115) unabhängig vom bestimmten mechanischen Widerstand in Abhängigkeit des Umkehrsignals in die untere Endlage (UEL) bewegt wird, wenn ein Geschwindigkeitssignal oberhalb eines vorbestimmten Schwellenwerts liegt.

6. Verfahren (300) nach einem der vorangehenden Ansprüche, wobei der mechanische Widerstand der Bewegung des Wischerblatts (115) auf der Basis einer Stromaufnahme einer das Wischerblatt (115) antreibenden elektrischen Antriebseinrichtung (135) bestimmt wird.

7. Verfahren (300) nach einem der vorangehenden Ansprüche, wobei das Wischerblatt (115) nach dem Anhalten auf eine Anforderung (310), das Wischerblatt (115) erneut zu bewegen, zunächst aufwärts bewegt wird.

8. Verfahren (300) nach einem der vorangehenden Ansprüche, wobei das Umkehrsignal nach einer vorbestimmten Zahl Anhaltevorgängen (325 - 355) umgeschaltet wird.

9. Computerprogrammprodukt mit Programmcodemitteln zur Durchführung des Verfahrens (300) nach einem der vorangehenden Ansprüche, wenn es auf einer Verarbeitungseinrichtung (155) abläuft oder auf einem computerlesbaren Datenträger gespeichert ist.

10. Vorrichtung (100) zur Steuerung der Bewegung eines Wischerblatts (115) über eine Wischfläche (110), umfassend:
- eine Antriebseinrichtung (135) zur Bewegung des Wischerblatts (115) auf und ab über die Wischfläche (110) zwischen einer unteren Wendelage (UWL) und einer oberen Wendelage (OWL);
- ein erstes Eingabemittel (165) zur Erfassung einer Anforderung, das Wischerblatt (115) anzuhalten;
- ein zweites Eingabemittel (150) zur Erfassung eines mechanischen Widerstands gegen die Bewegung des Wischerblatts (115) über die Wischfläche (110);
- eine Steuereinrichtung (155), die dazu eingerichtet ist, die Antriebseinrichtung (135) anzusteuern, das Wischerblatt (115) abwärts in eine untere Endlage (UEL) und von dort aufwärts in eine erste Parklage (PL1) zu bewegen, falls ein Umkehrsignal vorliegt;
- wobei die Steuereinrichtung (155) ferner dazu eingerichtet ist, das Wischerblatt (115) nur dann abwärts in die untere Endlage (UEL) zu bewegen, wenn der mechanische Widerstand unterhalb eines vorbestimmten Schwellenwerts liegt.

## Claims

1. Method (300) for controlling the movement of a wiper blade (115) over a wiping surface (110), containing the following steps:
- Moving (315) the wiper blade (115) up and down across the wiping surface (110) between a lower turning position (UWL) and an upper turning position (OWL);
- Detecting (320) a request to stop the wiper blade (110);
- Moving (345) the wiper blade (110) downwards into a lower end position (UEL) and from there upwards into a first park position (PL1), if there is a reversing signal; and
- Stopping (355) the wiper blade (115);
- wherein the wiper blade (115) is only then moved downwards into the lower end position (UEL), if a low mechanical resistance against the movement of the wiper blade (115) over the wiping surface (110) has previously been determined.

2. Method (300) according to Claim 1, further comprising the step of moving (350) the wiper blade (115) downwards into a second park position (PL2) if there is no reversing signal.

3. Method (300) according to Claim 2, wherein the first park position (PL1) is above the lower turning position (UWL) and this is above the second park position (PL2).

4. Method (300) according to Claim 1, wherein the lower turning position (UWL) corresponds to the second park position (PL2).

5. Method (300) according to any one of the preceding claims, wherein the wiper blade (115) is moved into the lower end position (UEL) irrespective of the determined mechanical resistance and depending on the reversing signal, if a speed signal exceeds a predetermined threshold.

6. Method (300) according to any one of the preceding claims, wherein the mechanical resistance of the movement of the wiper blade (115) is determined based on a current consumption of an electrical drive means (135) driving the wiper blade (115).

7. Method (300) according to any one of the preceding claims, wherein the wiper blade (115), after stopping in response to a request (310) to move the wiper blade (115) again, initially moves upwards.

8. Method (300) according to any one of the preceding claims, wherein the reversing signal is switched over after a predetermined number of stopping processes (325- 355).

9. Computer program product with a program code means for carrying out the method (300) according to any one of the preceding claims, if it is run on a processing means (155) or stored on a computer-legible data medium.

10. Device (100) for controlling the movement of a wiper blade (115) across a wiping surface (110), comprising:
- a drive means (135) for moving the wiper blade (115) up and down across the wiping surface (110) between a lower turning position (UWL) and an upper turning position (OWL);
- a first input means (165) for detecting a request to stop the wiper blade (115);
- a second input means (150) for detecting a mechanical resistance against the movement of the wiper blade (115) across the wiping surface (110);
- a control means (155), which is configured to control the drive means (135) to move the wiper blade (115) downwards into a lower end position (UEL) and from there upwards into a first park position (PL1), if there is a reversing signal;
- wherein the control means (155) is also configured to move the wiper blade (115) downwards into the lower end position (UEL), only if the mechanical resistance is below a predetermined threshold value.

## Revendications

1. Procédé (300) de commande du déplacement d'un essuie-glace (115) sur une surface à essuyer (110), comprenant les étapes consistant à :
- déplacer (315) le balai d'essuie-glace (115) de haut en bas sur la surface à essuyer (110) entre une position de rebroussement inférieure (UWL) et une position de rebroussement supérieure (OWL) ;
- détecter (320) une demande d'arrêt du balai d'essuie-glace (110) ;
- déplacer (345) le balai d'essuie-glace (110) vers le bas à une position finale inférieure (UEL) puis vers le haut à une première position de repos (PL1), en présence d'un signal d'inversion ; et
- arrêter (355) le balai d'essuie-glace (115) ;
- dans lequel le balai d'essuie-glace (115) n'est déplacé à la position finale inférieure (UEL) que si une résistance mécanique plus faible s'opposant au mouvement du balai d'essuie-glace (115) sur la surface à essuyer (110) a été préalablement déterminée.

2. Procédé (300) selon la revendication 1, comprenant en outre l'étape consistant à déplacer (350) le balai d'essuie-glace (115) vers le bas à une seconde position de repos (PL2) en l'absence du signal d'inversion.

3. Procédé (300) selon la revendication 2, dans lequel la première position de repos (PL1) se situe au-dessus de la position de rebroussement inférieure (UWL) et dans lequel celle-ci se situe au-dessus de la seconde position de repos (PL2).

4. Procédé (300) selon la revendication 1, dans lequel la position de rebroussement inférieure (UWL) correspond à la seconde position de repos (PL2).

5. Procédé (300) selon l'une quelconque des revendications précédentes, dans lequel le balai d'essuie-glace (115) est déplacé indépendamment de la résistance mécanique déterminée en fonction du signal d'inversion à la position finale inférieure (UEL) lorsqu'un signal de vitesse se situe au-dessus d'une valeur de seuil prédéterminée.

6. Procédé (300) selon l'une quelconque des revendications précédentes, dans lequel la résistance mécanique au déplacement du balai d'essuie-glace (115) est déterminée sur la base d'une consommation de courant par un dispositif d'entraînement électrique (135) entraînant le balai d'essuie-glace (115).

7. Procédé (300) selon l'une quelconque des revendications précédentes, dans lequel le balai d'essuie-glace (115), après l'arrêt, est d'abord déplacé vers le haut lors d'une demande (310) demandant de déplacer à nouveau le balai d'essuie-glace (115).

8. Procédé (300) selon l'une quelconque des revendications précédentes, dans lequel le signal d'inversion est inversé après un nombre prédéterminé de processus d'arrêt (325-355).

9. Produit de programme informatique comportant des moyens à code de programme destinés à mettre en oeuvre le procédé (300) selon l'une quelconque des revendications précédentes, lorsqu'il s'exécute sur un dispositif de traitement (155) ou lorsqu'il est stocké sur un support de données lisible par ordinateur.

10. Dispositif (100) de commande du déplacement d'un essuie-glace (115) sur une surface à essuyer (110), comprenant :
- un dispositif d'entraînement (135) pour déplacer le balai d'essuie-glace (115) de haut en bas sur la surface à essuyer (110) entre une position de rebroussement inférieure (UWL) et une position de rebroussement supérieure (OWL) ;
- un premier moyen d'entrée (165) pour détecter une demande d'arrêt du balai d'essuie-glace (115) ;
- un second moyen d'entrée (150) pour détecter une résistance mécanique s'opposant au déplacement du balai d'essuie-glace (115) sur la surface à essuyer (110) ;
- un dispositif de commande (155) qui est conçu pour commander le dispositif d'entraînement (135) afin de déplacer le balai d'essuie-glace (115) vers le bas à une position finale inférieure (UEL) puis vers le haut à une première position de repos (PL1), en présence d'un signal d'inversion ;
- dans lequel le dispositif de commande (155) est en outre conçu pour ne déplacer le balai d'essuie-glace (115) vers le bas à la position finale inférieure (UEL) que lorsque la résistance mécanique se situe en dessous d'une valeur de seuil prédéterminée.
